**Europäisches Patentamt**

**European Patent Office**

**Office européen des brevets**

(19)

(11) Veröffentlichungsnummer: **0 268 696**
**A1**

(12) # EUROPÄISCHE PATENTANMELDUNG

(21) Anmeldenummer: **86116288.1**

(22) Anmeldetag: **24.11.86**

(51) Int. Cl.⁴: **F02B 75/24** , F02B 25/02 ,
F02B 47/02

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

(43) Veröffentlichungstag der Anmeldung:
**01.06.88 Patentblatt 88/22**

(84) Benannte Vertragsstaaten:
**DE FR GB SE**

(71) Anmelder: **Simon, Istvan**
**Rosengässchen 7**
**CH-8200 Schaffhausen(CH)**

(72) Erfinder: **Simon, Istvan**
**Rosengässchen 7**
**CH-8200 Schaffhausen(CH)**

(74) Vertreter: **Kerr, Andrew**
**Postfach 122 Finkelerweg 44**
**CH-4144 Arlesheim BL(CH)**

(54) **Zweitakt-Verbrennungskraftmaschine.**

(57) Zur Erzielung eines günstigen Uebergangs der Frischluft vom Ansaugraum (7a, 7b) in den Verbrennungsraum (12a, 12b) sind Kanäle (6a, 6b) durch den Kolben (1a, 1b) vorgesehen. Kolbenaussenmantel und Zylinderinnenmantel sind mit einer hitzbeständigen Keramikschicht (14a, 14b) versehen, welche Schichten durch angeschweisste Metalldrahtgitter gehalten sind. Am Zylinderblock ist ein verschiebbarer Kolbenführungsschlitten (18a, 18b, 19a, 19b, 23a, 23b) angebracht, der eine Beseitigung der radialen Kolbenkräfte bewirkt. Zum Temperatur-und Spannungsausgleich sowie zur Leistungssteigerung in den Zylinderwänden ist eine Wassereinspritzvorrichtung (11a, 11b) in einem Kompressionsansatzraum (9a, 9b) vorgesehen, und in die Zylinderstirnwand des Verbrennungsraumes (12a, 12b) ein unter elektrischer Niederspannung setzbarer Wärmespeicher (24a, 24b) eingebaut.

EP 0 268 696 A1

Fig. 1

## Zweitakt-Verbrennungskraftmaschine

Die Erfindung betrifft eine Zweitakt-Verbrennungskraftmaschine mit zwei im Gegentakt arbeitenden, koaxial liegenden, gleich bewegbar gehaltenen Kolben und mit einer zwischen diesen Kolben angeordneten Schwungradkurbel, wobei die der Schwungradkurbel naheliegenden Kolbenstirnseiten für den Frischluftzufuhrhub vorgesehen sind, und wobei eine Frischlufteinlassöffnung einerseits und eine Auslassöffnung für das Abgas andererseits nahe der Längsmitte des Kolbenhubraumes vorgesehen sind.

Vom gleichen Patentbewerber wurde bereits ein Zweitakt-Schwingkolbenmotor vorgeschlagen (EP 0 058 178), bei dem die Frischluftübergangskanäle im Zylindermantel angeordnet sind und die Kolbenstange im Zylindergehäuse geradlinig geführt ist.

Die DE-OS-3 029 287 A1 zeigt eine Zweitakt-Brennkraftmaschine, bei der die Frischgasübergangskanäle mit Hohlzylinderquerschnitt längs der Kolbenstange angeordnet sind.

Der Erfindung liegt nun die Aufgabe zugrunde, eine Zweitakt-Verbrennungskraftmaschine zu schaffen, deren Frischgasübergangskanäle möglichst kurz und strömungstechnisch günstig sind, und die radialen Kolbenkräfte weitgehend aufgehoben werden, so dass der Kolben und die Zylinderinnenwand mit einer temperaturbeständigen, isolierenden Schicht mit möglichst kleinem radialem Spielraum versehen werden kann, und wobei Mittel zur Reduktion der Höchsttemperatur und zum Temperaturausgleich der Begrenzungswände des Verbrennungsraumes vorgesehen sind.

Vorteilhafterweise sollte die Erfindung auch die folgenden Merkmale aufweisen:
ein durch ein Metallgitter verstärkter Aussenmantel jedes Kolbens aus einer Keramikschicht,
ein durch ein Metallgitter verstärkter Innenmantel jedes Zylinders aus einer Keramikschicht,
ein Wärmespeicher am Boden jeder Verbrennungskammer und
eine Heizvorrichtung für besagten Wärmespeicher, zum Beispiel mit elektrischer Niederspannung betrieben.

Die erfindungsgemässe Zweitakt-Verbrennungskraftmaschine wird entweder mit einem Kompressionssystem (Diesel) oder mit einem Vergaser und Zündkerzen (Benzin) betrieben.

Diese Aufgabe wird erfindungsgemäss gelöst durch eine Zweitakt-Verbrennungskraftmaschine, welche die im kennzeichnenden Teil des Patentanspruchs 1 aufgeführten Merkmale aufweist.

In der Zeichnung ist ein Ausführungsbeispiel des Erfindungsgegenstandes dargestellt. Es zeigen:

Fig. 1 einen Vertikalschnitt durch die gegenüberliegenden Zylinder und Kolben,

Fig. 2 einen Grundriss nach der Linie II-II der Fig. 1,

Fig. 3 einen Schnitt nach der Linie III-III der Fig. 2 durch den Verbrennungsraum,

Fig. 4 einen Längsschnitt durch Kolben und Kolbenstange nach der Linie IV-IV der Fig. 2,

Fig. 5 einen Schnitt nach der Linie V-V der Fig. 4 durch den Kolben mit einer durch ein Metalldrahtgitter gehaltenen Keramikschicht,

Fig. 6 einen Querschnitt durch Zylinder und Kolben bei geöffnetem Frischluftansaugraum,

Fig. 7 einen Querschnitt bei geöffnetem Verbrennungsraum,

Fig. 8 einen Querschnitt bei komprimierter Frischluft, und

Fig. 9 einen Querschnitt bei Beendigung der Wassereinspritzung.

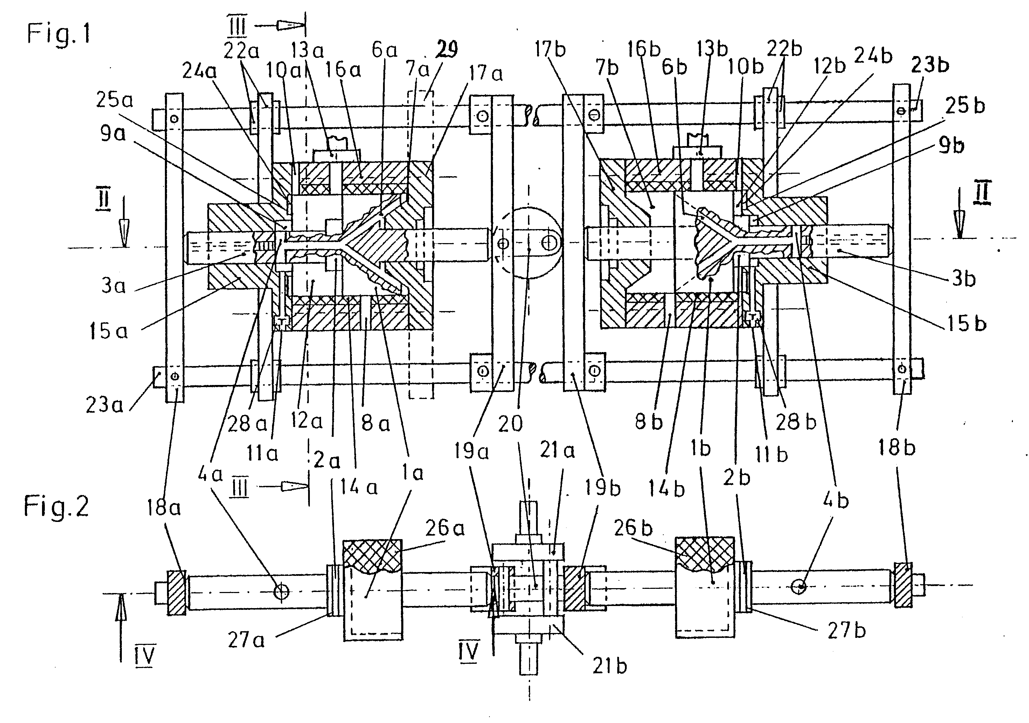

Die in den Fig. 1 und 2 dargestellte Zweitakt-Verbrennungskraftmaschine weist zwei im Gegentakt arbeitende, in gleicher Achse liegende, gleich bewegbar gehaltene Kolben 1a, 1b auf. Die beiden Kolbenstangen 3a, 3b sind in einem rahmenartigen Führungsschlitten mit äusseren Traversen 18a, 18b, inneren Traversen 19a, 19b und zylindrischen Stangen 23a, 23b axial gehalten.

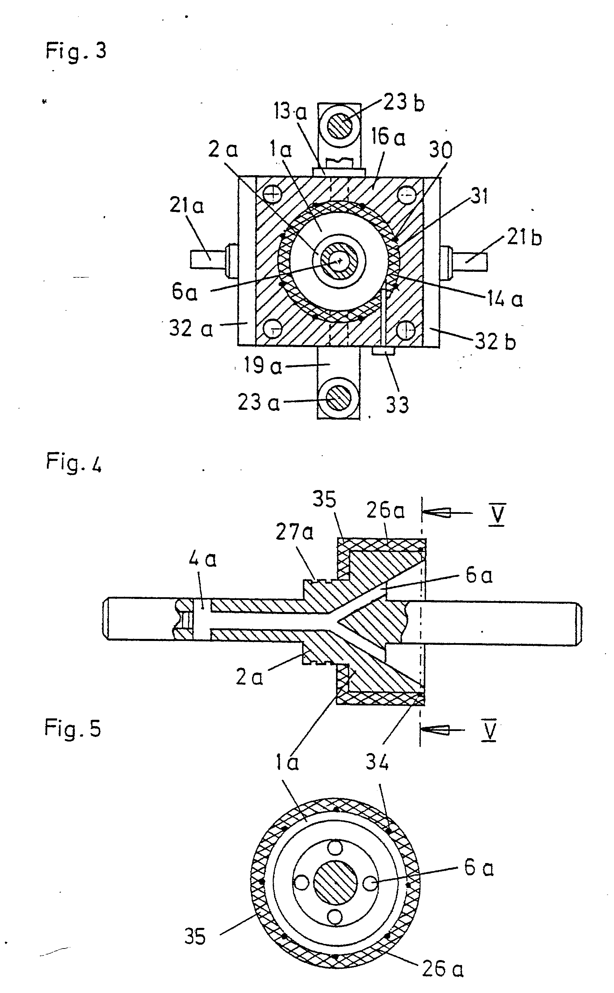

Die Zylinder bestehen aus Kolbenstangenführungsnaben 15a, 15b, Zylindermantel 16a, 16b und Böden 17a, 17b und sind durch seitliche Platten 32a, 32b (Fig. 3) zu einem Zylinderblock zusammengesetzt. An den beiden Zylinderköpfen sind Arme angebracht, welche aussen Längslager 22a, 22b aufweisen. In diesen sind die parallel zur Kolbenstangenachse liegenden, zylindrischen Stangen 23a, 23b des Führungsschlittens bewegbar geführt. Die Kolbenstangen 3a, 3b liegen stirnseitig an den äusseren Traversen 18a, 18b und an den inneren Traversen 19a, 19b auf. Die innere Traverse 19a ist über einer Kurbelstange 20 mit einer Schwungradkurbel 21a, 21b gelenkartig verbunden, welche zwischen den inneren Traversen 19a, 19b und den Kolben 1a, 1b vorgesehen ist.

Die der Schwungradkurbel 21a, 21b naheliegende Kolbenstirnseite ist für den Frischluftzufuhrhub vorgesehen. Nahe der Mitte des Kolbenhubraumes 7a, 7b, 12a, 12b ist einerseits eine Frischlufteinlassöffnung 8a, 8b und andererseits eine Auslassöffnung 13a, 13b für das Abgas durch den Zylindermantel 16a, 16b vorgesehen.

Die Kolben 1a, 1b weisen auf ihrer Verbrennungsseite einen zylindrischen Ansatz 2a, 2b auf. Dieser ist an seinem Mantel mit parallelen Ringnuten 27a, 27b versehen (Fig.2 und 4). Der zylindrische Ansatz (2a, 2b) ragt in der Kompressionstotpunktlage dieses Kolbens in einen zylindrischen Kompressionsansatzraum 9a, 9b des Zylindermantels 16a, 16b (Fig. 1 rechts).

Von der der Schwungradkurbel 21a, 21b naheliegenden Stirnseite der Kolben 1a, 1b führen vier Frischluftkanäle 6a, 6b durch den Kolben 1a, 1b zusammen in einen in der Kolbenstange 3a, 3b liegenden Längskanal (Fig. 1, 4 und 5). Dieser Längskanal mündet in einen quer zur Kolbenstangenachse liegenden Kanal 4a, 4b. Im Bereich der Kompressionstotpunktlage des Kolbens 1a 1b, führt der Querkanal 4a, 4b zum Kompressionsansatzraum 9a, 9b des Zylindermantels 16a, 16b (Fig. 1 links).

Die der Schwungradkurbel 21a, 21b abstehenden Zylinderböden 17a, 17b sind mit den vorstehenden Kolbenstangenführungsnaben 15a, 15b ausgebildet. Diese Naben 15a, 15b dienen ausser zur Lagerung der Kolbenstange auch zum zeitweisen Abschluss der Querkanäle 4a, 4b (Fig. 1 rechts).

Im Zylindermantel 16a, 16b, anschliessend and die Zylinderböden des Verbrennungsraumes 12a, 12b ist die Kraftstoffeinspritzöffnung 10a, 10b vorgesehen. In den Kompressionsansatzraum 9a, 9b führt eine mit Rückschlagventil 28a, 28b versehene Wassereinspritzöffnung 11a, 11b.

Der Kolben 1a, 1b (Fig. 1, 2, 4 und 5) ist an seiner Stirnseite gegen den Verbrennungsraum 12a, 12b und an seiner Mantelseite mit einer durch ein Metalldrahtgitter 34 gehaltenen, aufgegossenen Keramikschicht 26a, 26b, 35 versehen (Fig. 4 und 5). Das Metalldrahtgitter 34 ist am Kolben angeschweisst. In entsprechender Weise ist auch der Zylinderinnenmantel mit einer durch ein Metalldrahtgitter 30 gehaltenen Keramikschicht 14a, 14b, 31 versehen (Fig. 1 und 3). In diese führt ein Thermostat 33.

Im Zylinderboden des Verbrennungsraumes 12a, 12b ist ein Wärmespeicher 24a, 24b aus metallhaltigem Graphit eingesetzt, der unter elektrischer Niederspannung gesetzt werden kann. Der Wärmespeicher 24a, 24b ist nach aussen durch eine Keramikplatte 25a, 25b isoliert. Wassereinspritzöffnung 11a, 11b, Wärmespeicher 24a, 24b und Thermostat 33 dienen zum Temperatur-und Spannungausgleich in der Zylinderwand. Um einen plötzlichen Wassereintritt in den Verbrennungsraum 12a, 12b vor dem Zün dungsmoment zu verhindern, sind die zylindrischen Ansätze 2a, 2b mit den parallelen Ringnuten 27a, 27b versehen.

Die inneren, der Schwungradkurbel 21a, 21b nahestehenden Zylinderböden 17a, 17b sind mit in den Zylinderraum 7a, 7b ragenden Naben für die Lagerung und Abdichtung der Kolbenstangen 3a, 3b ausgebildet.

Die Funktionsweise der beschriebenen Zweitakt-Verbrennungskraftmaschine ist aus den Fig. 6 bis 9 ersichtlich.

In Fig. 6 ist der Frischluftansaugraum 7a ganz geöffnet und die durch Kolben 1a und Kolbenstange 3a führenden Kanäle 6a, 4a abgeschlossen.

In Fig. 7 ist der Verbrennungsraum 12a ganz geöffnet und der Frischluftdurchgangskanal 4a mündet in den Verbrennungsraum 12 a zum Ausstossen der verbrannten Gase.

In Fig. 8 ist die Frischluft komprimiert. Es erfolgt die Kraftstoffeinspritzung durch die Oeffnung 10a und die Wassereinspritzung durch die Oeffnung 11a in getrennte Räume.

Nach Fig. 9 hört die Wassereinspritzung auf, wenn der zylindrische Kolbenansatz 2a den Kompressionsansatzraum 9a wieder öffnet.

Das Wasser wird beim Eintreten in den Kolben 1a durch die Hitze der umliegenden Wände und der komprimierten Luft erwärmt. Bewegt sich der Kolben 1a aus der Stellung, wie sie in Fig. 8 gezeigt wird, weiter nach links, kann sich das Kraftstoff-Luft-Gemisch beim Aufeinandertreffen entzünden. Der Kolben 1a bewegt sich nach rechts wie in Fig. 9 gezeigt wird. Der zylindrische Kolbenansatz 2a öffnet den Kompressionsansatzraum 9a. Das vorgewärmte Wasser tritt in den Verbrennungsraum 12 ein und wird vom heissen verbrannten Gas schlagartig verdampft. Der so entstandene Dampf verursacht eine plötzliche Steigerung der Energie, die dem Kolben zugeführt wird, und steigert somit auch die Leistung der Maschine.

Der Führungschlitten bewirkt eine Aufhebung der radialen Kolbenkräfte und ermöglicht, das radiale Kolbenspiel und die Kolbenreibung klein zu halten. Wie aus Fig. 1 links strichpunktiert ersichtlich ist, können die Böden 17a, 17b der Zylinder mit gleitenden Endführungen 29 bei einem einzelnen Zylinder oder einzelnen, senkrecht hintereinander angeordneten Zylindern für die zylindrischen Stangen 23a, 23b des rahmenartigen Schlittens versehen sein.

## Ansprüche

1. Zweitakt-Verbrennungskraftmaschine, mit zwei im Gegentakt arbeitenden, koaxial liegenden, gleich bewegbar gehaltenen Kolben und mit einer zwischen diesen Kolben angeordneten Schwungradkurbel, wobei die der Schwungradkurbel naheliegenden Kolbenstirnseiten für den Frischluftzufuhrhub vorgesehen sind, und wobei eine Frischlufteinlassöffnung einerseits und eine Auslassöffnung für das Abgas andererseits nahe der Längsmitte des Kolbenhubraumes vorgesehen sind, dadurch gekennzeichnet, dass die beiden Kolbenstangen (3a, 3b) in einem rahmenartigen Führungsschlitten (18a, 18b; 19a, 19b; 23a, 23b) gehalten sind, dass die Kolben (1a, 1b) auf der Verbrennungsseite einen zylindrischen Ansatz (2a, 2b) aufweisen, der in der Kompressionslage des Kolbens in einen zylindrischen Kompressionsansatzraum (9a, 9b) des Zylinders (16a, 16b) ragt, dass von den der Schwungradkurbel (21a, 21b) naheliegenden Stirnseiten der Kolben (1a, 1b) Frischluftkanäle (6a, 6b) durch den Kolben in der Längsachse der Kolbenstangen in einen Kanal zusammenführen, welcher Kanal in einen quer zur Kolbenstangenachse liegenden Kanal (4a, 4b) mündet, der im Bereich der Kompressionstotpunktlage des Kolbens (1a, 1b) zum Kompressionsansatzraum (9a, 9b) führt, dass die der Schwungradkurbel (21a, 21b) abstehenden Zylinderböden mit einer vorstehenden Kolbenstangenführungsnabe (15a, 15b) ausgebildet sind, welche Naben zum zeitweisen Abschluss der querliegenden Kanäle (4a, 4b) dienen, dass im Zylindermantel (16a, 16b) anschliessend an den Zylinderböden eine Kraftstoffeinspritzöffnung (10a, 10b) vorgesehen ist, dass eine mit Rückschlagventil versehene Wassereinspritzöffnung (11a, 11b) in den Kompressionsansatzraum (9a, 9b) führt, dass der Kolben (1a, 1b) und der Innen-(26a, 26b, 35, 31) versehen sind, und dass ein unter elektrische Niederspannung setzbarer Wärmespeicher (24a, 24b) im Zylinderboden des Verbrennungsraums (12a, 12b) angeordnet ist.

2. Zweitakt-Verbrennungskraftmaschine nach Anspruch 1, dadurch gekennzeichnet, dass die beiden Zylinder (16a, 16b) mit Armen versehen sind, welche aussen Längslager (22a, 22b) aufweisen, in denen parallel zur Kolbenstangenachse liegende, zylindrische Stangen (23a, 23b) des Führungsschlittens bewegbar sind.

3. Zweitakt-Verbrennungskraftmaschine nach Anspruch 2, dadurch gekennzeichnet, dass der Kolben (1a, 1b) an der Stirnseite, gegen den Verbrennungsraum (12a, 12b), und an der Mantelseite mit der durch ein Metalldrahtgitter gehaltenen Keramikschicht (26a, 26b, 35) versehen ist.

4. Zweitakt-Verbrennungskraftmaschine nach Anspruch 3, dadurch gekennzeichnet, dass der Zylinder (16a, a6b) am Innenmantel mit der durch ein Metalldrahtgitter (31) gehaltenen Keramikschicht (14a, 14b) versehen ist, und dass ein Thermostat (33) in diese Keramikschicht führt.

5. Zweitakt-Verbrennungskraftmaschine nach Anspruch 4, dadurch gekennzeichnet, dass der unter elektrische Niederspannung setzbarer Wärmespeicher (24a, 24b) aus metallhaltigem Graphit besteht, und dass dieser Wärmespeicher (24a, 24b) durch eine Keramikplatte (25a, 25b) nach aussen isoliert ist.

6. Zweitakt-Verbrennungskraftmaschine nach Anspruch 5, dadurch gekennzeichnet, dass die zylindrischen Ansätze (2a, 2b) mit parallelen Ringnuten (27a, 27b) versehen sind.

7. Zweitakt-Verbrennungskraftmaschine nach Anspruch 6, dadurch gekennzeichnet, dass die inneren, der Schwungradkurbel (21a, 21b) naheliegenden Zylinderböden (17a, 17b) mit in den ZylinderAnsaugraum (7a, 7b) ragenden kegelstumpfförmigen Naben für die Lagerung der Kolbenstange (3a, 3b) ausgebildet sind.

Fig.1

Fig.2

Fig. 3

Fig. 4

Fig. 5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E,X | US-A-4 627 389 (SIMON) <br> * Spalte 1, Zeile 1 - Spalte 6, Zeile 42; Figuren 1-9 * & JP-A-61 040 427 (26-02-1986) <br> --- | 1-7 | F 02 B 75/24 <br> F 02 B 25/02 <br> F 02 B 47/02 |
| A,D | WO-A-8 200 685 (SIMON) <br> --- | | |
| A,D | DE-A-3 029 287 (STELZER) <br> ----- | | |

| | RECHERCHIERTE SACHGEBIETE (Int. Cl.4) |
|---|---|
| | F 02 B |

Der vorliegende Recherchenbericht wurde für alle Patentansprüche erstellt

| Recherchenort | Abschlußdatum der Recherche | Prüfer |
|---|---|---|
| DEN HAAG | 21-01-1988 | KOOIJMAN F.G.M. |